# EUROPEAN PATENT APPLICATION

(11) **EP 1 605 164 A1**
(43) Date of publication of application: **14.12.2005**
(21) Application number: 05011766.2
(22) Date of filing: 31.05.2005
(51) Int. Cl.: F04B 43/02, F04B 43/00

(54) **Pump**

(30) Priority: 01.06.2004 JP 2004163519
(71) Applicant: KABUSHIKI KAISHA TOYOTA JIDOSHOKKI, Kariya-shi, Aichi-ken (JP)
(72) Inventor: Yamamoto, Shinya, Kariya-shi Aichi-ken (JP); Yoshikawa, Makoto, Kariya-shi Aichi-ken (JP); Mishina, Takao, Kariya-shi Aichi-ken (JP); Kuwahara, Mamoru, Kariya-shi Aichi-ken (JP)
(74) Representative: TBK-Patent

(57) **Abstract**

A pump includes a unit case, a volume-changing body, a support portion, a driver and a seal member. The volume-changing body is accommodated in the unit case for defining a pump chamber. The support portion is provided in the unit case. The driver is connected to the volume-changing body and slidably supported by the support portion. The driver is reciprocatable to deform the volume-changing body thereby changing a volume of the pump chamber to perform a pumping action. The seal member is provided between the unit case and the driver for preventing lubricant from leaking from a sliding region between the driver and the support portion to the volume-changing body.

## Description

### BACKGROUND OF THE INVENTION

The present invention relates to a pump that performs a pumping action by the deformation of a volume-changing body such as a diaphragm thereof.

A clean room in which a semiconductor manufacturing equipment is placed is equipped with a pump. According to a pumping action of the pump, the pump draws air from the inside of the clean room to pass through a filter and returns the filtered air into the clean room. As an example of such kind of the pump, Unexamined Japanese Utility Model Application Publication No. 7-14179 discloses a diaphragm pump of prior art.

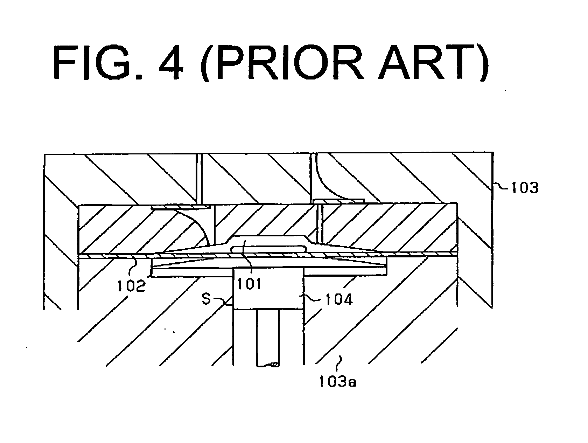

FIG 4 shows the diaphragm pump according to the prior art. The diaphragm pump includes a diaphragm case 103 and a diaphragm 102 and a piston 104. The diaphragm 102 is accommodated in the diaphragm case 103 for defining a pump chamber 101. The piston 104 is connected to the diaphragm 102 and supported by a cylinder 103a provided in the diaphragm case 103. The piston 104 is reciprocated to deform (displace) the diaphragm 102 thereby changing the volume of the pump chamber, so that the pump performs a pumping action to draw air into the pump chamber 101 and discharge the air out of the pump chamber 101.

Meanwhile, a space that is located on the side of the diaphragm 102 opposite to the pump chamber 101 is continuously in communication with a sliding region S between the piston 104 and the cylinder 103a. Thus, lubricant such as grease and lubricating oil that is flowed from the sliding region S to the above space easily reaches the diaphragm 102. If the diaphragm 102 is broken (tom or ruptured) due to its degradation, the lubricant may flow into the pump chamber 101 through the breakage part and be sent into the clean room.

The present invention is directed to a pump that prevents lubricant from flowing into a pump chamber even when a volume-changing body is broken.

### SUMMARY OF THE INVENTION

According to the present invention, a pump includes a unit case, a volume-changing body, a support portion, a driver and a seal member. The volume-changing body is accommodated in the unit case for defining a pump chamber. The support portion is provided in the unit case. The driver is connected to the volume-changing body and slidably supported by the support portion. The driver is reciprocatable to deform the volume-changing body thereby changing a volume of the pump chamber to perform a pumping action. The seal member is provided between the unit case and the driver for preventing lubricant from leaking from a sliding region between the driver and the support portion to the volume-changing body.

### BRIEF DESCRIPTION OF THE DRAWINGS

The features of the present invention that are believed to be novel are set forth with particularity in the appended claims. The invention together with objects and advantages thereof, may best be understood by reference to the following description of the presently preferred embodiments together with the accompanying drawings in which:
FIG. 1 is a longitudinal cross-sectional view of a diaphragm pump of a first preferred embodiment according to the present invention;
FIG. 2 is a longitudinal cross-sectional view of a diaphragm pump of a second preferred embodiment according to the present invention;
FIG 3 is a longitudinal cross-sectional view of a diaphragm pump of a third preferred embodiment according to the present invention; and
FIG. 4 is a longitudinal cross-sectional view of a diaphragm pump according to prior art.

### DETAILED DESCRIPTION OF THE PREFERRED EMBODIMENTS

The following will describe a first preferred embodiment in which the present invention is applied to a diaphragm pump, which is provided to a clean room in which a semiconductor manufacturing equipment is placed.

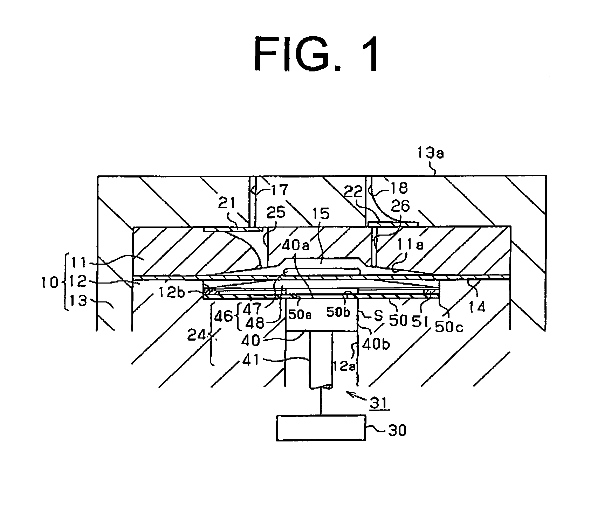

Firstly, the diaphragm pump will be briefly described. FIG 1 shows a longitudinal cross-sectional view of the diaphragm pump (referred to merely as "pump" hereinafter). As shown in FIG 1, the pump includes a diaphragm case 10 as a unit case, a diaphragm (volume-changing body) 14 supported by the diaphragm case 10, a drive source 30 such as an electric motor, and a power transmission mechanism 31 (e.g. a mechanism that converts rotation of an electric motor into reciprocating movement) that connects the diaphragm 14 to the drive source 30. The power transmission mechanism 31 includes a driver 24 that is supported by the diaphragm case 10 and connected to the diaphragm 14.

According to the operation of the drive source 30, the driver 24 of the power transmission mechanism 31 is reciprocated to elastically deform (displace) the diaphragm 14, so that the pump performs a pumping action. By the pumping action, air (a fluid) is drawn from the inside of a clean room (not shown) to pass through a filter (not shown), and then the filtered air is returned into the clean room.

The following will describe the components of the pump in detail. The diaphragm case 10 includes a first block 11, a second block 12 fixedly joined to the first block 11, and a body case 13 in which the first and second blocks 11, 12, and the diaphragm 14 are accommodated. The body case 13 is formed in a cylindrical shape and has an end portion 13a located on one end thereof (an upper end in FIG. 1). The first and second blocks 11, 12 are arranged in the body case 13 such that the first block 11 is located adjacent to the end portion 13a.

The diaphragm 14 is made of a metal and has a disc shape with a uniform thickness. The diaphragm 14 is flexible as is generally known. The diaphragm 14 is fixed to the diaphragm case 10 with annular region of the outer peripheral portion thereof held between the first and second blocks 11, 12. The first block 11 has a substantially mortar-shaped (cone-shaped) recess 11a in the end face thereof adjacent to the second block 12. The opening of recess 11a is closed by the diaphragm 14, thus the enclosed internal space of the recess 11a, thereby defining a pump chamber 15.

The body case 13 (the end portion 13a) of the diaphragm case 10 has a suction passage 17 to which an external low-pressure piping (not shown) is connected, and a discharge passage 18 to which an external high-pressure piping (not shown) is connected. The first block 11 has a suction port 25 that interconnects the pump chamber 15 and the suction passage 17, and a discharge port 26 that interconnects the pump chamber 15 and the discharge passage 18. A suction valve 21 or a reed valve is provided between the suction port 25 in the first block 11 and the suction passage 17 in the body case 13 (the end portion 13a). A discharge valve 22 or a reed valve is provided between the discharge port 26 in the first block 11 and the discharge passage 18 in the body case 13 (the end portion 13a).

The second block 12 has a cylinder (a cylindrical inner surface) 12a as a support portion at the center thereof. The second block 12 has a recess 12b that has a circular cross section and is connected to the cylinder 12a at the center portion of the end face thereof adjacent to the first block 11.

The driver 24 includes a rod 41 connected to the drive source 30, a piston 40 connected to the end (the upper end in FIG. 1) of the rod 41, and a coupler 46 that connects the piston 40 to the center of the diaphragm 14. The piston 40 is inserted into the cylinder 12a so that the piston 40 is slidably supported thereby. The coupler 46 includes a disc-shaped first support member 47 located in the pump chamber 15, and a disc-shaped second support member (coupling member) 48 that is located outside the pump chamber 15 and is fixedly joined to the end of the piston 40. The center portion of the diaphragm 14 is held between the first and second support members 47, 48.

The piston 40 is reciprocated along the longitudinal axis thereof (the vertical direction as seen in FIG. 1) by the operation of the drive source 30 with contacting the outer peripheral surface 40b thereof to the cylinder 12a. As the rod 41 is reciprocated, the diaphragm 14 is deformed (displaced), thereby changing the volume of the pump chamber 15.

The following will describe in detail the manner in which the volume of the pump chamber 15 is changed. When the piston 40 is moved away from the pump chamber 15 (downward as seen in FIG. 1), the diaphragm 14 is deformed away from the pump chamber 15 and the volume of the pump chamber 15 is increased. During this suction stroke, the diaphragm 14 is deformed away from the pump chamber 15 so that the air is drawn through the suction passage 17 into the pump chamber 15 while pushing open the suction valve 21. On the other hand, when the piston 40 is moved toward the pump chamber 15 (upward as seen in FIG 1), the diaphragm 14 is deformed toward the pump chamber 15 and the volume of the pump chamber 15 is decreased. During this discharge stroke, the diaphragm 14 is deformed toward the pump chamber 15 so that the air in the pump chamber 15 is discharged through the discharge passage 18 while pushing open the discharge valve 22.

In a sliding region S between the piston 40 and the cylinder 12a, lubricant having fluidity during the operation of the pump, such as grease and lubricating oil, is present (supplied) for providing excellent sliding characteristics therebetween, that is, reducing the mechanical loss of the pump. The lubricant may be flowed from the sliding region S toward the diaphragm 14 by the reciprocating movement of the piston 40. In the present preferred embodiment, a seal member 50 is provided between the diaphragm case 10 and the driver 24 in detail, between the outer circumference of the recess 12b and the driver 24 for preventing the lubricant, which is flowed from the sliding region S toward the diaphragm 14, from reaching the diaphragm 14.

The following will describe the seal member 50 in detail. The seal member 50 is accommodated in the recess 12b of the second block 12. The seal member 50 is a disc-shaped diaphragm made of rubber. That is, the seal member 50 is a planar flexible body (elastic body). The seal member 50 has a through hole 50a through which the driver 24 is inserted at the center thereof.

A tension plate 51 is accommodated in the recess 12b of the second block 12. The tension plate 51 is fixedly joined to the second block 12 (more specifically, a radially outer portion of the inner bottom surface of the recess 12b) by fixing means such as bolt (not shown). An outer peripheral portion 50c as a fixed end of the seal member 50 is fixed to the second block 12, that is, to the diaphragm case 10 in such a manner that the outer peripheral portion 50c is held at its annular region between the second block 12 and the tension plate 51. Thus, the lubricant that is flowed from the sliding region S toward the diaphragm 14 is prevented from leaking from a side of a surface (a lower surface in FIG. 1 or a surface on a side opposite to the diaphragm 14) of the seal member 50 to a side of the other surface (an upper surface in FIG 1 or a surface adjacent to the diaphragm 14) via the outer peripheral portion 50c.

An inner peripheral portion 50b as a movable end of the seal member 50 is also fixed to the driver 24 in such a manner that the inner peripheral portion 50b is held at its annular region between the end surface 40a of the piston 40 and the second support member 48. Thus, the lubricant that is flowed from the sliding region S toward the diaphragm 14 is prevented from leaking from the side of the lower surface of the seal member 50 to the side of the upper surface thereof via the inner peripheral portion 50b.

Since the seal member 50 is fixed to the diaphragm case 10 at the outer peripheral portion 50c thereof and to the driver 24 at the inner peripheral portion 50b thereof as described above, the seal member 50 is elastically deformed in accordance with the reciprocating movement of the piston 40 in such a manner that the inner peripheral portion 50b is displaced relative to the outer peripheral portion 50c in the direction of the longitudinal axis of the piston 40 (the vertical direction in FIG 1). Namely, the seal member 50 is deformable, that is, in the form of a diaphragm. Thus, even though the seal member 50 is fixed at the outer peripheral portion 50c thereof to the diaphragm case 10 and at the inner peripheral portion 50b thereof to the driver 24, the seal member 50 serves to prevent the lubricant from leaking from the sliding region S to the diaphragm 14. The elastic coefficient of the seal member 50 is set smaller than that of the diaphragm 14.

According to the above-described preferred embodiment the following advantageous effects are obtained.
(1) The seal member 50 is provided between the diaphragm case 10 and the driver 24 for preventing the lubricant from leaking from the sliding region S between the piston 40 and the cylinder 12a to the diaphragm (volume-changing body) 14. Namely, the seal member 50 is arranged in such a position so as to prevent the communication between the sliding region S and the space that is located on the side of the diaphragm 14 opposite to the pump chamber 15. Therefore, if the diaphragm (volume-changing body) 14 is broken (torn or ruptured), the lubricant is prevented from flowing into the pump chamber 15 and is not sent into the clean room into which the air (the fluid) is supplied.
(2) The seal member 50 is deformable in such a manner that the inner peripheral portion (movable end) 50b is displaced relative to the outer peripheral portion (fixed end) 50c. Also, the seal member 50 is fixed to the diaphragm case 10 at the outer peripheral portion (fixed end) 50c and to the driver 24 at the inner peripheral portion (movable end) 50b. Thus, there is no fear that the lubricant leaks from the sliding region in comparison with the case adopting a seal member (e.g. O-ring) that is held by one of the diaphragm case 10 and the driver 24 and slides over the other. Namely, the lubricant is reliably prevented from leaking from the sliding region S to the diaphragm (volume-changing body) 14.
(3) The inner peripheral portion (movable end) 50b of the seal member 50 is held between the piston 40 and the second support member (a coupling member) 48. Namely, with fixedly joining of the piston 40 and the second support member (the coupling member) 48, the inner peripheral portion (movable end) 50b of the seal member 50 is fixed to the driver 24. Thus, assembling of the pump is made easier in comparison with the case when the inner peripheral portion (movable end) 50b of the seal member 50 is fixed to the driver 24 with dedicated fixing means.
(4) The elastic coefficient of the seal member 50 is set smaller than that of the diaphragm (volume-changing body) 14. Thus, excessive load is not applied to the seal member 50 during the operation of the pump, that is, during the reciprocating movement of the driver 24. Thus, the seal member 50 is prevented from being broken earlier than the diaphragm (volume-changing body) 14, and the durability thereof is increased. Since the seal member 50 is located outside the pump chamber 15, the internal pressure of the pump chamber 15 is not applied to the seal member 50, which is one of factors that the durability of the seal member 50 is increased.
(5) The seal member 50 or a diaphragm serves to function as a volume-changing body (a second volume-changing body), that is, functions to change the volume of the pump chamber 15 for backup when the diaphragm 14 is broken to malfunction. The provision of the seal member 50 enables the pump to continuously perform the satisfactory pumping action even after the diaphragm 14 is broken to malfunction (5-1). The inner peripheral portion 50b of the seal member 50 is held between the piston 40 and the second support member 48 as described above, that is, the seal member 50 is placed adjacent to the diaphragm 14, thereby leading to the reduction in the minimum volume of the pump chamber 15 after the diaphragm 14 is broken to malfunction. Thus, this position of the seal member 50 is effective in that the pump continues to perform the satisfactory pumping action (5-2).

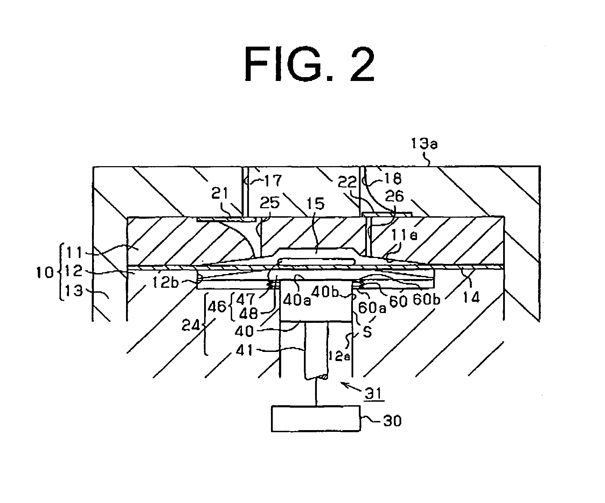

The following will describe a second preferred embodiment that is an alternative embodiment of the above-described first preferred embodiment. FIG 2 shows a pump of the second preferred embodiment. The differences from the pump of the first preferred embodiment will be described. Like or same elements are referred to by the same reference numerals as those which have been used in describing the pump of the first preferred embodiment, and the description thereof is not reiterated.

As shown in FIG. 2, the pump of the second preferred embodiment differs from the pump of the first preferred embodiment in that the seal member 50 and the tension plate 51 are removed, and also that a seal member 60 is provided. The seal member 60 is a rubber bellows, that is, an accordion elastic body having a substantially cylinder shape. The seal member 60 is located in the recess 12b of the second block 12 in such a position so as to surround the opening of the cylinder 12a.

Annular region of a first end or a fixed end 60a (a lower end in FIG. 2 or an end on a side opposite to the diaphragm 14) of the seal member 60 is fixedly joined to the second block 12 (more specifically the radially inner of the bottom surface of the recess 12b), that is, to the diaphragm case 10 by fixing means (not shown) such as adhesive. Thus, the lubricant that is flowed from the sliding region S toward the diaphragm 14 (an internal space of the seal member 60) is prevented from leaking from the inside of the seal member 60 to the outside thereof via the first end 60a.

Annular region of a second end or a movable end 60b (an upper end in FIG. 2 or an end adjacent to the diaphragm 14) of the seal member 60 is fixedly joined to the end surface the second support member 48 adjacent to the second block 12, that is, to the driver 24 by fixing means (not shown) such as adhesive. Thus, the lubricant that is flowed from the sliding region S toward the diaphragm 14 (the internal space of the seal member 60) is prevented from leaking from the inside of the seal member 60 to the outside thereof via the second end 60b.

Since the seal member 60 is fixed to the diaphragm case 10 at the first end 60a and to the driver 24 at the second end 60b, the seal member 60 is elastically deformed in accordance with the reciprocating movement of the piston 40 in such a manner that the second end 60b is displaced relative to the first end 60a in the direction of the longitudinal axis of the piston 40- Since the seal member 60 is deformable, that is, a bellows, even though the seal member 60 is fixed to the diaphragm case 10 at the first end 60a and to the driver 24 at the second end 60b, the seal member 60 serves to prevent the lubricant from leaking from the sliding region S to the diaphragm 14. The elastic coefficient of the seal member 60 is set smaller than that of the diaphragm 14.

According to the pump of the second preferred embodiment, substantially the same advantageous effects are obtained as mentioned in the paragraphs (1), (2) and (4) with reference to the first preferred embodiment. Also, the following advantageous effect is obtained.

The seal member 60 that is the bellows serves to function as a volume-changing body (a second volume-changing body) for backup when the diaphragm (volume-changing body) 14 is broken to malfunction. Namely, the provision of the seal member 60 enables the pump to continuously perform the satisfactory pumping action even after the diaphragm (volume-changing body) 14 is broken to malfunction.

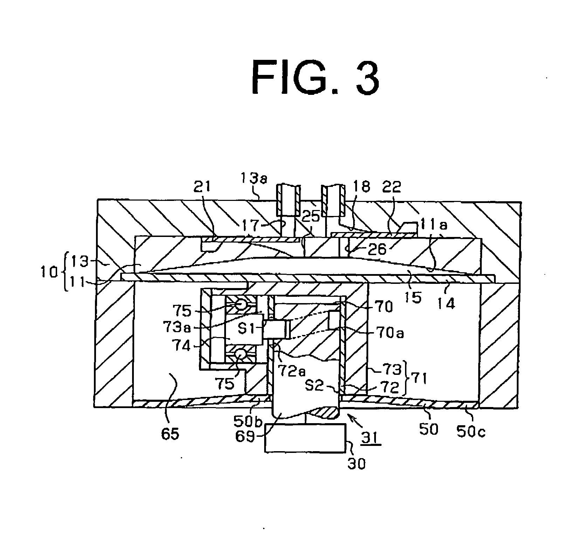

The following will describe a third preferred embodiment that is an alternative embodiment of the above-described first preferred embodiment. FIG. 3 shows a pump of the third preferred embodiment. The differences from the pump of the first preferred embodiment will be described. Like or same elements are referred to by the same reference numerals as those which have been used in describing the pump of the first preferred embodiment, and the description thereof is not reiterated.

As shown in FIG. 3, the pump of the third preferred embodiment differs from the pump of the first preferred embodiment in that the second block 12 and the driver 24 are removed. In the diaphragm case 10, an accommodation chamber 65 is defined on the side of the diaphragm 14 opposite to the pump chamber 15. A part of a rotary shaft 69 that is rotationally driven by the drive source 30 protrudes into the accommodation chamber 65. This protruding part (cam) 70 has a cam groove 70a on the outer circumferential surface thereof. The cam groove 70a is inclined with respect to the central axis of the rotary shaft 69. A driver 71 is rotatably and slidably fitted on the cam 70 as a support portion. The driver 71 and the rotary shaft 69 are components of the power transmission mechanism 31.

The driver 71 includes a bearing 72 rotatably and slidably fitted on the outer circumferential surface of the cam 70, and a cylindrical guide body 73 fixedly fitted on the bearing 72. The guide body 73 is secured (connected) to the center of the diaphragm 14. A cam chamber 73a is defined in the guide body 73. A roller 74 is supported in the cam chamber 73a by the guide body 73 through a radial bearing 75. A part of the roller 74 is inserted into the cam groove 70a through a through hole 72a formed in the bearing 72.

Due to the engagement of the outer circumferential surface of the part of the roller 74 with the cam groove 70a, the roller 74, that is, the driver 71 supporting the roller 74 is reciprocated in the direction of the central axis of the rotary shaft 69 (the vertical direction in FIG. 3) as the rotary shaft 69 rotates. Thus, the diaphragm 14 is deformed to change the volume of the pump chamber 15, so that the pump performs a pumping action.

A seal member 50 is located in the accommodation chamber 65. Most part of the seal member 50 is outside of the driver 71. Annular region of the outer peripheral portion 50c of the seal member 50 is fixedly joined to the diaphragm case 10 by fixing means (not shown) such as adhesive and a combination of bolt and tension plate. Annular region of the inner peripheral portion 50b of the seal member 50 is fixedly joined to the end surface of the driver 71 by fixing means (not shown) such as adhesive and a combination of bolt and tension plate. Thus, the lubricant, which is flowed from the driver 71, that is, from the sliding region between the driver 71 and the cam 70 toward the diaphragm 14, more specifically from a sliding region S1 between the roller 74 and the cam groove 70a and a sliding region S2 between the bearing 72 and the outer peripheral surface of the cam 70, is prevented from leaking from a side of a surface (a lower surface in FIG. 3 or a surface on a side opposite to the diaphragm 14) to a side of the other surface (an upper surface in FIG. 3 or a surface adjacent to the diaphragm 14) via the outer peripheral portion 50c and the inner peripheral portion 50b.

According to the pump of the third preferred embodiment, substantially the same advantageous effects are obtained as mentioned in the paragraphs (1), (2), (4) and (5-1) with reference to the first preferred embodiment.

The above-described first through third preferred embodiments are merely examples of the present invention and may be modified without departing from the purpose of the invention. The following alternative embodiments are also practicable. Any combination of the following alternative embodiments is practiced unless the alternative embodiments for the combination are inconsistent with each other.

The seal member may be made of resin or metal. An O-ring or a lip seal may be used as the seal member. Such slide-type seal member is held by one of the diaphragm case and the driver and slides over the other, so that the seal member prevents the lubricant from leaking from the sliding region toward the volume-changing body.

The elastic coefficient of the seal member may be set equal to or greater than that of the volume-changing body.

The present invention is applicable to pumps other than a diaphragm pump, for example, to a pump using a bellows as a volume-changing body.

The present invention is applicable to a pump for pumping a gas other than air. Also, the present invention is applicable to a pump for pumping a liquid such as oil and water.

The present examples and embodiments are to be considered as illustrative and not restrictive, and the invention is not to be limited to the details given herein but may be modified within the scope of the appended claims.

A pump includes a unit case, a volume-changing body, a support portion, a driver and a seal member. The volume-changing body is accommodated in the unit case for defining a pump chamber. The support portion is provided in the unit case. The driver is connected to the volume-changing body and slidably supported by the support portion. The driver is reciprocatable to deform the volume-changing body thereby changing a volume of the pump chamber to perform a pumping action. The seal member is provided between the unit case and the driver for preventing lubricant from leaking from a sliding region between the driver and the support portion to the volume-changing body.

## Claims

1. A pump including a unit case, a volume-changing body being accommodated in the unit case for defining a pump chamber, a support portion being provided in the unit case, and a driver being connected to the volume-changing body, the driver being slidably supported by the support portion, the driver being reciprocatable to deform the volume-changing body thereby changing a volume of the pump chamber to perform a pumping action, **characterized in that** a seal member is provided between the unit case and the driver for preventing lubricant from leaking from a sliding region between the driver and the support portion to the volume-changing body.

2. The pump according to claim 1, wherein the seal member has a fixed end and a movable end, the seal member being deformable in such a manner that the movable end is displaced relative to the fixed end, wherein the fixed end is fixed to the unit case, the movable end being fixed to the driver.

3. The pump according to claim 2, wherein the driver includes a piston that is slidably supported by the support portion and a coupling member that connects the piston to the volume-changing body, the movable end of the seal member being held between the piston and the coupling member.

4. The pump according to any one of claims 2 and 3, wherein the volume-changing body and the seal member are elastically deformed by the reciprocating movement of the driver, the seal member having elastic coefficient that is smaller than that of the volume-changing body.

5. The pump according to claim 4, wherein the seal member functions to change the volume of the pump chamber after the volume-changing body is broken to malfunction, so that the pump continuously performs the pumping action.

6. The pump according to any one of claims 2 through 5, wherein the seal member is in the form of a diaphragm or a bellows.

7. The pump according to any one of claims 1 through 6, wherein the support portion is formed on the unit case.

8. The pump according to claim 7, wherein the support portion is a cylinder of the unit case.

9. The pump according to any one of claims 1, 2 and 6, further comprising a rotary shaft having a protruding portion that protrudes into an accommodation chamber, the driver being fitted on the protruding portion as the support portion.

10. The pump according to any one of claims 1 through 8, wherein the seal member is placed adjacent to the volume-changing body.

11. The pump according to any one claims 1 through 10, wherein the volume-changing body is a diaphragm or a bellows.
